# EUROPÄISCHE PATENTANMELDUNG

(11) **EP 1 384 633 A1**
(43) Veröffentlichungstag der Anmeldung: **28.01.2004**
(21) Anmeldenummer: 03014137.8
(22) Anmeldetag: 24.06.2003
(51) Int. Cl.: B60R 25/04, B60R 25/02

(54) **Schliesssystem für Motorfahrzeuge**

(30) Priorität: 23.07.2002 DE 10233511
(71) Anmelder: HUF HÜLSBECK & FÜRST GMBH & CO. KG, 42551 Velbert (DE)
(72) Erfinder: Wittwer, Reinhard, 42579 Heiligenhaus (DE); Schindler, Mirko, 42549 Velbert (DE); Hansen-Rüther, Dirk, 58256 Ennepetal (DE)
(74) Vertreter: Mentzel, Norbert, Dipl.-Phys.

(57) **Zusammenfassung**

Bei einem Schließsystem gibt es einen zum Steuern des Motors dienenden Betätiger, der zwischen einer den Parkzustand des Fahrzeugs kennzeichnenden Ruhelage und mindestens einer den Fahrtzustand bestimmenden Arbeitslage manuell bewegbar ist. Ein Betätigerblockglied sichert normalerweise die Ruhelage des Betätigers. Zum Schließsystem gehört aber auch ein Riegel für eine Diebstahlssicherung des Fahrzeugs. Dieser Riegel ist zwischen einer Freigabestellung und einer Verriegelungsstellung umsteuerbar und wird seinerseits über ein Riegelblockglied in seiner Freigabelage gesichert. Zur zuverlässigen und preiswerten Ausbildung des Schließsystems wird vorgeschlagen, zwischen dem Betätigerblockglied und dem Riegelblockglied eine Verbindung anzuordnen, die dafür sorgt, dass bei wirksamem Riegelblockglied das Betätigerblockglied unwirksam ist und umgekehrt, bei unwirksamem Riegelblockglied eine Wirksamkeit des Betätigerblockglieds vorliegt. Darüber hinaus übernimmt das Riegelblockglied in der Verriegelungsstellung des Riegels die wichtige Funktion, Ursache dafür zu sein, dass das Betätigerblockglied in seiner wirksamen Position gehalten wird und dadurch der Betätiger in der Ruhelage arretiert ist. Ursache dafür ist eine Verriegelungsschulter, an welcher sich das Riegelblockglied in diesem Fall abstützt.

## Beschreibung

Die Erfindung richtet sich auf ein Schließsystem der im Oberbegriff des Anspruches 1 angegebenen Art. Die dabei zur Anwendung kommende Einrichtung zur Zugangsberechtigung kann in jeder an sich bekannten Weise ausgebildet sein, z.B. als sogenanntes "keyless-go-system" oder in Form von elektronischen oder mechanischen Schlüsseln. Zum Zünden und/oder Anlassen eines Verbrennungsmotors im Fahrzeug oder, allgemein gesagt, zum Steuern eines beliebigen Motors dient ein Betätiger, der manuell in verschiedene Lagen bewegt werden kann und dadurch unterschiedliche Funktionen am Motor auslöst. In jedem Fall gibt es eine "Ruhelage", welche den Parkzustand des Fahrzeugs kennzeichnet, wo der Motor ruht. Darüber hinaus gibt es eine oder mehrere Arbeitslagen des Betätigers, die z.B. dem Fahrtzustand oder dem Start- bzw. Anlassen eines Verbrennungsmotors entsprechen.

Um den Betätiger in seiner Ruhelage zu sichern, ist ein erstes Blockadeglied vorgesehen, das zur Unterscheidung von einem weiteren kurz mit "Betätigerblockglied" bezeichnet werden soll. Dieses Betätigerblockglied wird beim Ansprechen-der Zugangsberechtigung unwirksam gesetzt und lässt dann eine Bewegung des Betätigers in dessen Arbeitslage bzw. Arbeitslagen zu.

Zur Diebstahlssicherung des Fahrzeugs ist ein zwischen zwei Stellungen umsteuerbarer Riegel vorgesehen, der in seiner einen Stellung, nämlich der Verriegelungsstellung, z.B. auf die Lenkung des Fahrzeugs einwirkt oder eine Betätigung der Schalthandhabe für das Motor-Getriebe verhindert. Die Diebstahlssicherung könnte auch aus einer Unterbrechung der Kraftstoffzufuhr zu einem Verbrennungsmotor dienen. Um das Fahrzeug lenken oder betreiben zu können, muss der Riegel in seine Freigabestellung umgesteuert werden, was zwar mechanisch erfolgen könnte, aber bei modernen Fahrzeugen überwiegend mittels eines Elektromotors geschieht.

Auch der Riegel wird in seiner Freigabestellung gesichert, was durch ein zweites Blockadeglied geschieht, welches nachfolgend zur Unterscheidung von dem vorgenannten ersten Blockadeglied mit "Riegelblockglied" bezeichnet werden soll.

Bei einem bekannten Schließsystem dieser Art (EP 0 999 968 B1) wird eine elektromagnetische Sperre als Riegelblockglied benutzt. Diese elektromagnetische Sperre wird aber zugleich als Betätigerblockglied zur Sicherung der Ruhelage des Betätigers verwendet. Wenn die elektromagnetische Sperre versagt, sind bei diesem bekannten Schließsystem gleichzeitig zwei Elemente des Schließsystems nicht mehr gesichert, nämlich sowohl der Betätiger als auch der Riegel, was verhängnisvolle Folgen haben kann.

Normalerweise werden zur Blockade des Betätigers einerseits und des Riegels andererseits getrennte elektrisch steuerbare Bauteile genutzt, wozu dann weitere elektronische Steuerteile gehören, nämlich getrennte Sensoren, Aktuatoren und die zugehörige Steuerlogik. Man benutzte nämlich nicht nur Sensoren, welche die Ruhelage und die diversen Arbeitslagen des Betätigers erkennen und unterscheiden müssen, sondern auch Sensoren um die Freigabestellung und die Verriegelungsstellung des Riegels festzustellen und der Steuerlogik zu melden. Schließlich sind, wie gesagt, getrennte Aktuatoren zur Blockade des Betätigers einerseits und des Riegels andererseits erforderlich, die in ihrer Arbeitsweise von der zugehörigen Steuerlogik bestimmt werden. Die vielen elektronischen Bauteile sind kostenaufwendig. Bei vielen elektrischen Bauteilen ist die Gefahr größer, dass ein elektronischer Bauteil versagt und damit das bekannte Schließsystem unbrauchbar wird.

Der Erfindung liegt die Aufgabe zugrunde, ein zuverlässiges Schließsystem der im Oberbegriff von Anspruch 1 genannten Art zu entwickeln, welches preiswert hergestellt werden kann. Dies wird erfindungsgemäß durch die im Anspruch 1 genannten Maßnahmen erreicht, denen folgende besondere Bedeutung zukommt.

Die mechanische Verbindung zwischen den beiden Blockadegliedern sorgt für eine exakte Koppelung ihrer Umsteuerungsbewegungen zwischen ihren jeweiligen wirksamen und unwirksamen Positionen bezüglich des Betätigers und des Riegels und zwar in zueinander spiegelbildlicher Weise. Wenn das Riegelblockglied wirksam gesetzt ist und den Riegel in der Freigabestellung sichert, dann sorgt die Verbindung automatisch dafür, dass sich das Betätigerblockglied in seiner unwirksamen Position befindet und daher der Betätiger zwischen seiner Ruhelage und seinen Arbeitslagen bewegt werden kann. Wenn dagegen das Betätigerblockglied wirksam ist und damit den Betätiger in seiner Ruhelage sichert, dann wird über die Verbindung das Riegelblockglied zwangsweise unwirksam gesetzt. Dann wird der Riegel nicht mehr in seiner Freigabestellung gehalten und kann motorisch oder elektrisch in seine Verriegelungsstellung zurückgestellt werden. Die Umsteuerungsbewegungen der beiden Blockadeglieder sind also exakt aufeinander abgestimmt.

Darüber hinaus kann über die Verbindung mindestens die wirksame Position des Betätigerblockglieds in der Ruhelage des Betätigers durch das Riegelblockglied arretiert sein. Dazu genügt es, das Riegelblockglied in der Verriegelungsstellung des Riegels an einer Schulter sich abstützen zu lassen, weil diese Abstützwirkung über die Verbindung die vorerwähnte Arretierung des Betätigerblockglieds gegenüber dem Betätiger zur Folge hat. Diese Schulter, die mit "Verriegelungsschulter" bezeichnet werden soll, ist bei der Umsteuerung des Riegels mitbeweglich und im einfachsten Fall Bestandteil des Riegels. Damit sind Fehlbedienungen der Blockadeglieder beim erfindungsgemäßen Schließsystem ausgeschlossen.

Durch diese Kopplung der beidseitigen Blockadeglieder lassen sich Sensoren an mindestens einem der miteinander zu verbindenden Endelemente sparen, z.B. diejenigen, die zur Erkennung der Stellung des Riegels normalerweise erforderlich sind. In jedem Fall werden aber Aktuatoren bei den erfindungsgemäß miteinander gekoppelten Blockadegliedern eingespart.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1,: schematisch und im Längsschnitt, ein erstes Schließsystem mit einem Betätiger und einem Riegel nach der Erfindung, welches ohne Schlüssel arbeitet, was als "keyless-go-system" bezeichnet wird, und zwar in einer ersten Arbeitsphase, nämlich in der Ruhelage des Betätigers einerseits in der Verriegelungsstellung des Riegels andererseits,
- Fig. 2 + 3: Querschnitte durch den in Fig. 1 gezeigten Betätiger längs der dortigen Schnittlinien II - II bzw. III - III,
- Fig. 4: die Draufsicht auf den Betätiger von Fig. 1 in Blickrichtung des Pfeils IV,
- Fig. 5: eine andere Betriebsphase des in Fig. 1 gezeigten ersten Ausführungsbeispiels, wo sich der Betätiger in seiner Arbeitslage und der Riegel in seiner Freigabelage befindet,
- Fig. 6, 7, 8,: in Analogie zu Fig. 2, 3 und 4 die Querschnitte bzw. die Draufsichten auf den Betätiger von Fig. 5 längs der dortigen Schnittlinien VI - VI bzw. VII - VII bzw. in Blickrichtung des Pfeils VIII,
- Fig. 9: ein zweites Ausführungsbeispiel der Erfindung und zwar in einer der Fig. 1 entsprechenden Darstellung und Position,
- Fig. 10,: in Analogie zu Fig. 4, die Draufsicht auf den in Fig. 9 gezeigten Betätiger,
- Fig. 11: das zweite Ausführungsbeispiel von Fig. 9, wenn sich die Bauteile in der aus Fig. 5 erkennbaren Position befinden,
- Fig. 12,: in Analogie zu Fig. 6, einen Querschnitt durch den in Fig. 11 gezeigten Betätiger längs der dortigen Schnittlinie XII - XII,
- Fig. 13: von einem dritten Ausführungsbeispiel der Erfindung im Längsschnitt nur den zugehörigen Betätiger, wenn sich dieser in seiner Ruhelage befindet, die derjenigen des ersten Ausführungsbeispiels von Fig. 1 entspricht, wobei der Riegel, der nicht näher gezeigt ist, die aus Fig. 1 ersichtliche Bauweise aufweisen kann,
- Fig. 14: eine Draufsicht auf den in Fig. 13 gezeigten Betätiger in Blickrichtung des Pfeils XIV von Fig. 13,
- Fig. 15: ein senkrecht zum Längsschnitt von Fig. 13 ausgeführter weiterer Längsschnitt durch den in Fig. 13 gezeigten Betätiger längs der versprungenen Schnittlinie XV - XV von Fig. 13,
- Fig. 16: ein Detail des in Fig. 13 gezeigten Betätigers, wenn sich dieser in seiner anderen Betriebsphase befindet, nämlich der Arbeitslage, was der in Fig. 5 gezeigten Betriebsphase des ersten Ausführungsbeispiels entspricht, , wobei der zugehörige Riegel entsprechend Fig. 5 des ersten Ausführungsbeispiels ausgebildet sein kann,
- Fig. 17: eine ebene Abwickelung einer am Betätiger von Fig. 13 vorgesehenen Steuerkurve, deren Draufsicht in Fig. 15 zu sehen ist,
- Fig. 18,: in einer der Fig. 1 entsprechenden Darstellung und Betriebsphase, ein viertes Ausführungsbeispiel der Erfindung,
- Fig. 19,: das Ausführungsbeispiel von Fig. 18 in einer weiteren Betriebsphase, wenn ein elektronischer Schlüssel in den Betätiger gesteckt worden ist, der Betätiger selbst aber sich noch in seiner mit Fig. 18 übereinstimmenden Ruhelage befindet und
- Fig. 20: das vierte Ausführungsbeispiel in einer dritten Betriebsphase, welche derjenigen von Fig. 5 des ersten Ausführungsbeispiels entspricht.

Alle vier Ausführungsbeispiele des erfindungsgemäßen Schließsystems sind in den Zeichnungen in zwei Baugruppen 10, 20 dargestellt die in beliebigem Abstand zueinander angeordnet sein können. Dieses Schließsystem arbeitet mit einer Zugangsberechtigung ohne einen Schlüssel, was als "keyless-go-system" bekannt ist. In diesem Fall besitzt die berechtigte Person einen mobilen Identifikationsgeber, der mit einem stationären Identifikationsnehmer im Fahrzeug kommuniziert. Die erste Baugruppe ist eine Diebstahlssicherung 10, die im vorliegenden Fall aus einer elektrischen Lenkradverriegelung besteht. Die zweite Baugruppe ist eine Motorsteuerung 20, die im vorliegenden Fall bei einem Verbrennungsmotor angewendet wird und daher als Zündanlassschalter ausgebildet ist.

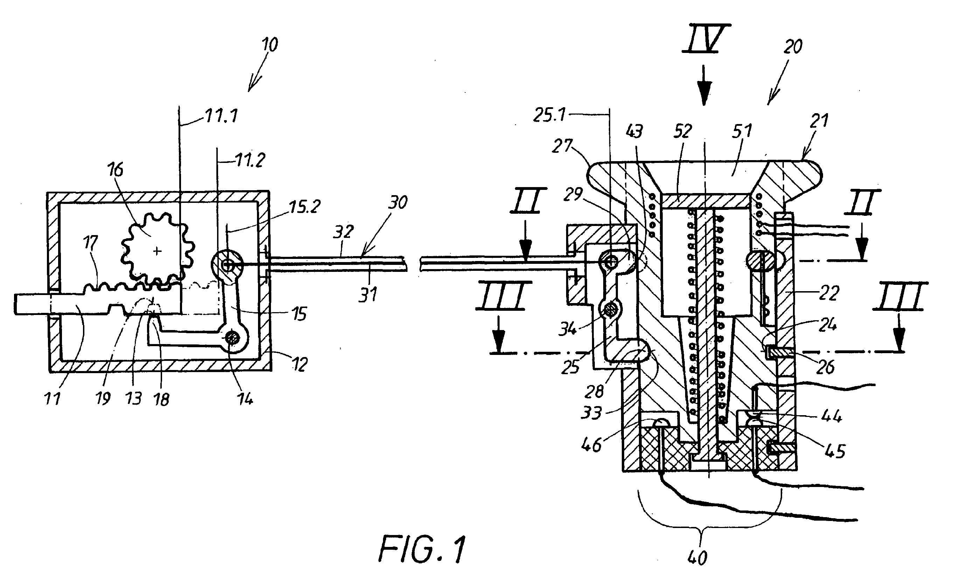

Die elektrische Lenkradverriegelung 10 besitzt einen Riegel 11, der sich in Fig. 1 in seiner durch die Hilfslinie 11.1 gekennzeichneten Verriegelungsstellung befindet. In der Verriegelungsstellung 11.1 ist der Riegel 11 aus dem Gehäuse 12 ausgefahren und greift in eine nicht näher gezeigte drehfeste Ausnehmung einer Lenkradsäule ein. Dann ist die Drehung des Lenkrads nicht möglich. Der Riegel 11 hat eine Verlängerung die mit dem Riegel 11 natürlich mitbeweglich ist und eine erste Schulter 13 aufweist, an welcher in dieser Stellung 11.1 ein Blockadeglied 15 sich abstützt. Zwecks Unterscheidung von ähnlichen Elementen im Bereich der Motorsteuerung 20 soll dieses Blockadeglied 15 "Riegelblockglied" und die Schulter 13 "Verriegelungsschulter" genannt werden. Das Riegelblockglied 15 ist hier als Winkelhebel ausgebildet, der bei 14 im Gehäuse 12 schwenkbar gelagert ist. Eine nicht näher gezeigte Federbelastung kann dafür sorgen, dass der eine Winkelarm des Riegelblockglieds 15 an der Verriegelungsschulter 13 sich abstützt. Durch eine am Riegelblockglied 15 angreifende Verbindung hat dies zur Folge, dass die Motorsteuerung 20 nicht betätigt werden kann.

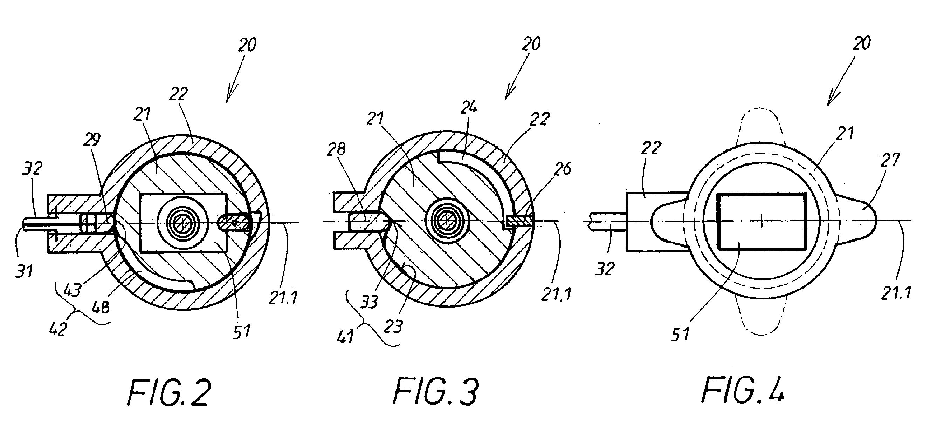

Die Motorsteuerung 20 besitzt zunächst einen Betätiger 21, der in diesem Ausführungsbeispiel aus einem Rotor besteht, welcher in einem ortsfesten Stator 22 drehbar aufgenommen ist. Rotor 21 und Stator 22 sind durch eine Umfangsnut 24 und einen darin eingreifenden Stift 26 miteinander axialfest verbunden, wie aus Fig. 3 zu ersehen ist. Nut und Stift 24, 26 begrenzen den Drehwinkel des Rotors, zu dessen manueller Bewegung eine aus Fig. 4 erkennbare Drehhandhabe 27 dient. Fig. 1 bis 4 zeigen eine erste Ausgangslage des Rotors 21, die in den Querschnitten von Fig. 2 bis 4 mit der Hilfslinie 21.1 markiert ist und nachfolgend als "Ruhelage" des Betätigers 21 bezeichnet werden soll.

Diese Ruhelage 21.1 des Rotors 21 wird durch ein weiteres Blockadeglied 25 gesichert, welches nachfolgend, wie bereits erwähnt wurde, mit "Betätigerblockglied" bezeichnet werden soll. Auch dieses besteht im vorliegenden Fall aus einem zweiarmigen Hebel mit abgewinkelten Armen, welcher bei 34 im Stator 22 schwenkbar gelagert ist. Die Armenden sind in Fig. 1 mit 28, 29 bezeichnet. Den beiden Armenden 28, 29 sind jeweils eine Steuerfläche 41, 42 zugeordnet, deren genaue Ausbildung aus den Querschnitten von Fig. 2 und 3 zu erkennen ist, die beim Rotor 21 als Umfangskontur in entsprechenden Axialebenen liegen und in folgender Weise ausgebildet sind.

Die dem Armende 28 zugeordnete erste Steuerfläche 41 umfasst eine Radialaussparung 33 im Rotor 21, welche über eine Rampe in einen Umfangsbereich 23 übergeht, der aus später noch näher ersichtlichen Gründen mit "Arbeitsschulter" bezeichnet werden soll. In der Ruhelage 21.1 gemäß Fig. 1 und 3 greift das eine Armende 28 gerade in die Radialaussparung 33 ein. Dieser Eingriff kann durch eine Zwangssteuerung erfolgen, in welche das andere Armende 29 integriert ist. Wie aus Fig. 1 und 2 hervorgeht, liegt das zweite Armende 29 an einem Umfangsbereich 43 des Rotors 21 an, der zu der erwähnten zweiten Steuerfläche 42 gehört. Das sorgt für eine noch näher zu beschreibende weitere Zwangssteuerung der beiden Blockadeglieder 15, 25.

Im vorliegenden Fall besteht die mechanische Verbindung 30 aus einem Bowdenzug dessen an sich flexibler Strang 31 die beiden Blockadeglieder 15, 25 miteinander bewegungsmäßig eng koppelt. Der Strang 31 befindet sich in einem zum Bowdenzug gehörenden Mantel 32, der am Riegelgehäuse 12 einerends und am Stator 22 andererends befestigt sind. Der Strang 31 ist sowohl auf Druck als auch auf Zug betätigbar und sorgt für eine formfeste, spielfreie Verbindung der beiden Blockadeglieder 15, 25. Das hat zur Folge, dass die Abstützung des Riegelblockglieds 15 an der Verriegelungsschulter 13 über den Druck-Zug-Strang 31 dafür sorgt, dass das Armende 28 vom Betätigerblockglied 25 in der Radialaussparung 33 formschlüssig arretiert ist. Dann ist eine Bewegung des Rotors 21 ausgeschlossen. Der Rotor 21 ist Bestandteil eines Schalters 40 mit diversen beweglichen und ruhenden Kontakten 44 bis 47. In der Ruhelage 21.1 ist die elektrische Verbindung zum Motor unterbrochen.

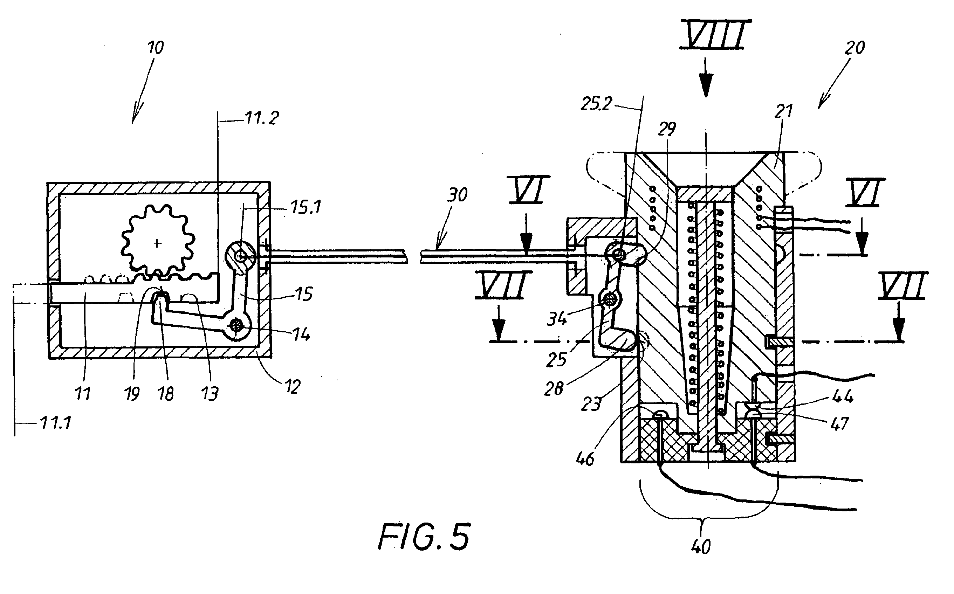

Wenn die hier als "keyless-go" ausgebildete Zugangsberechtigung erkennt, dass der berechtigte Benutzer das Fahrzeug starten möchte, so wird der Riegel 11 in seine andere mit der Hilfslinie 11.2 in Fig. 1 bezeichnete, strichpunktiert angedeutete Freigabestellung über einen Elektromotor bewegt, an dessen Ausgang sich ein Zahnrad 16 befindet. Es liegt eine formschlüssige Verbindung zwischen diesem Elektromotor und dem Riegel 11 vor. Im vorliegenden Fall greift das Zahnrad 16 des Elektromotors in eine am Riegel 11 vorgesehene Zahnstange 17 ein. Was dann passiert, ist strichpunktiert in Fig. 1 angedeutet. In der Freigabestellung 11.2 ist der Riegel 11 in das Gehäuse eingefahren und gibt die auch in Fig. 5 nicht näher gezeigte Lenksäule frei. Das Fahrzeug kann jetzt gelenkt werden. Dann ist, wie strichpunktiert in Fig. 1 verdeutlicht ist, eine Sperrausnehmung 19 in Ausrichtung mit einem am Riegelblockglied 15 vorgesehenen Sperrende 18. In jedem Fall ist die Verriegelungsschulter 13, wie aus Fig. 5 zu ersehen ist, weggefahren und die vorerwähnte Abstützung des Riegelblockglieds 15 findet nicht mehr statt.

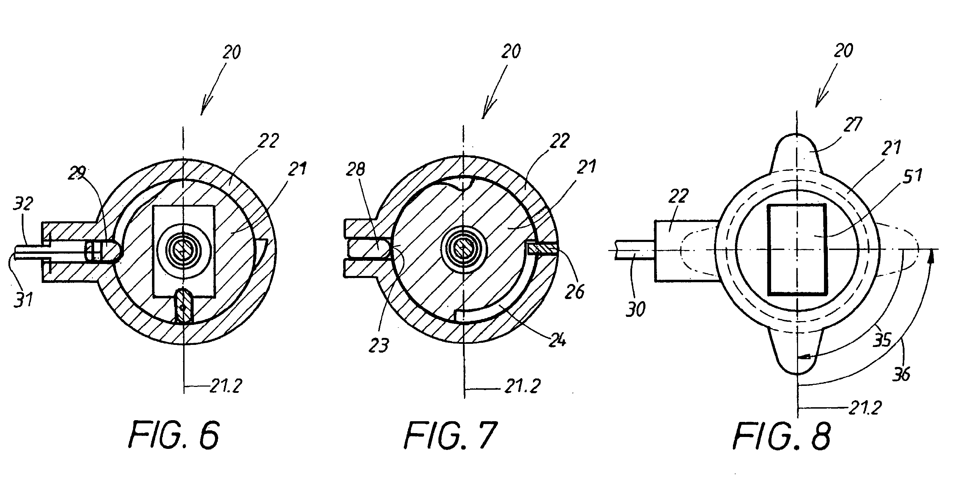

Dann kann der Rotor 21 manuell gedreht werden. Diese Drehbetätigung ist durch einen Pfeil 35 in Fig. 8 veranschaulicht. Dabei gelangt der Rotor 21 in die aus den Fig. 5 bis 8 ersichtliche weitere Drehlage, welche mit der Hilfslinie 21.2 gekennzeichnet ist und, wie bereits erwähnt wurde, mit "Arbeitslage" bezeichnet werden soll. Im drehfest mit dem Rotor 21 verbundenen Schalter 40 sind jetzt andere Kontakte 44, 47 miteinander elektrisch verbunden und führen zu der gewünschten Funktion im zugehörigen Motor des Fahrzeugs, z. B. Start oder Betrieb des Motors. Im vorliegenden Fall ist bereits die andere Dreh-Endstellung zwischen dem Stift 26 im Stator und der Nut 24 im Rotor 21 erreicht. Während dieser Drehbetätigung 35 laufen folgende weiteren wichtigen Vorgänge ab.

Es liegt, wie bereits erwähnt wurde, eine Zwangssteuerung des Betätigerblockglieds 25 vor, weil beide Armenden 28, 29 mit ihren Steuerflächen 41, 42 stets formschlüssig und konform zueinander zusammenwirken. Während das erste Armende 28 bei der vorerwähnten Drehbetätigung 35 aus der Radialaussparung 33 von Fig. 3 über die Rampe auf seinen Umfangsbereich 23 auffährt, bewegt sich das andere Armende 29 vom Umfangsbereich 43 über eine Schräge in eine Ausnehmung 48 des Rotor-Umfangs. Dieser zwingt eine Schwenkbewegung des Betätigerblockglieds 25 um dessen Lager 34.

Dieses Umschwenken des Betätigerblockglieds 25 hat zur Folge, dass über die genannte mechanische Verbindung 30 das andere Riegelblockglied 15 zwangsweise mitverschwenkt wird und in die aus Fig. 5 ersichtliche andere Schwenkposition gelangt. Diese Position ist in Fig. 5 durch die Hilfslinie 15.1 gekennzeichnet und erweist sich als "wirksame Position" des Riegelblockglieds 15. Dann ist nämlich sein Sperrende 18 in die Sperrausnehmung 19 des Riegels 11 eingeschwenkt und blockiert somit den Riegel 11 in dessen aus Fig. 5 ersichtlichen Freigabestellung 11.2. Die vorausgehende, in Fig. 1 gezeigte Schwenkstellung des Riegelblockglieds 15 ist durch die Hilfslinie 15.2 gekennzeichnet, die dann die "unwirksame Position" des Riegelblockglieds 15 kennzeichnet.

Bei dem erfindungsgemäßen Schließsystem ist die aus Fig. 5 erkennbare und mit der Hilfslinie 25.2 gekennzeichnete Schwenkposition vom Betätigerblockglied 25 Ursache dafür, dass über die formfeste Verbindung 30 das Riegelblockglied 15 sich in der genannten wirksamen Position 15.1 gegenüber dem Riegel 11 befindet. Es findet eine Arretierung statt. Das Riegelblockglied 15 kann nicht in die unwirksame Position von Fig. 1 überführt werden. Ursache dafür ist, dass sich das am anderen Ende der Verbindung 30 befindliche Betätigerblockglied 25, wie Fig. 5 zeigt, mit seinem Armende 28 in Abstützung an der zu seiner Steuerfläche 41 gehörenden Arbeitsschulter 23 befindet, was besonders gut aus Fig. 7 zu entnehmen ist.

Um den Motor zu stoppen, muss der Rotor 21 über seine Drehhandhabe 27 in Gegenrichtung im Sinne des Pfeils 36 von Fig. 8 gedreht werden. Dann wird das Betätigerblockglied 25 aus seiner Schwenkposition 25.2 in seine durch die Hilfslinie 25.1 in Fig. 1 verdeutlichte Position zurückgeschwenkt. Dies geschieht in spiegelbildlicher Weise durch die Zwangsführung zwischen den beiden Steuerflächen 41, 42 vom Rotor 21 und den Armenden 28, 29 vom Betätigerblockglied 25. Bis auf den Riegel 11, der zunächst noch in seiner aus Fig. 5 ersichtlichen Freigabestellung 11.2 verbleibt, wird über die Kopplung mittels der Verbindung 30 das Riegelblockglied 15 zwangsweise in seine beschriebene unwirksame Position 15.2 überführt, die in Fig. 1 gezeigt ist. Dann ist sein Sperrende 18 außer Eingriff mit der Sperrausnehmung 19. Der Riegel 11 könnte dann über den erwähnten Elektromotor wieder zurückbewegt werden. Dies geschieht aber zweckmäßigerweise erst dann, wenn bestimmte weitere Betriebsbedingungen am Fahrzeug erfüllt sind. Dazu gehören, einzelweise und/oder in Kombination, dass das Fahrzeug tatsächlich steht, und/oder dass der Motor aus ist, und/oder dass die Tür fahrseitig geöffnet wird, und/oder dass ein Taster betätigt wird, und/oder der Türgriff betätigt wird. Weil in der Schwenkposition 25.1 das Betätigerblockglied 25 die Drehung des Rotors 21 ausschließt, kann diese Position als "wirksame Position" bezeichnet werden. Damit erweist sich die andere mit 25.2 in Fig. 5 bezeichnete Schwenkposition als die "unwirksame Position" des Betätigerblockglieds 25.

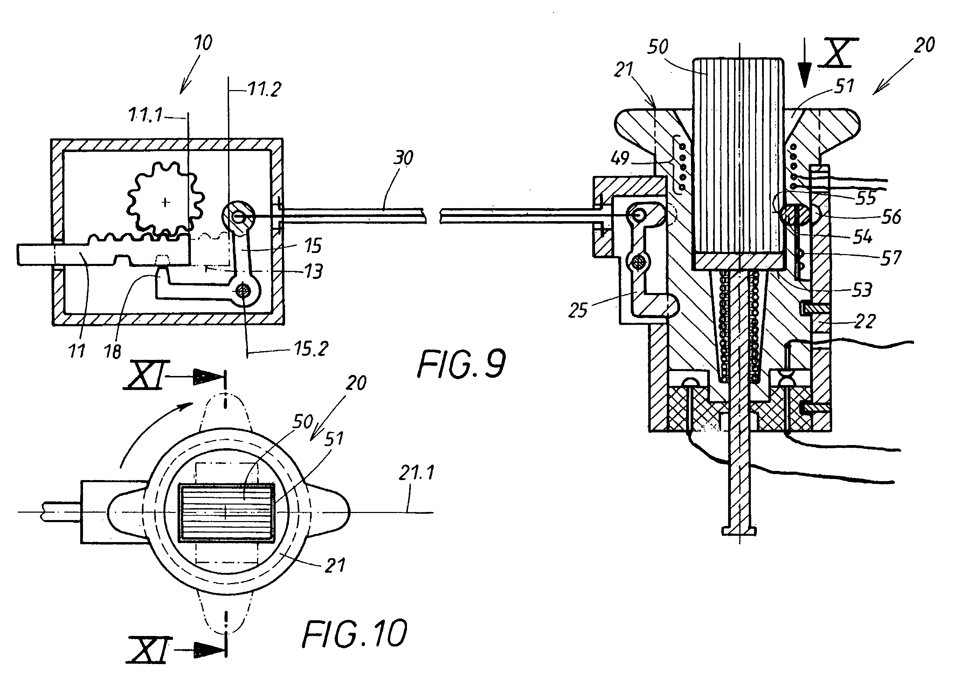

Im zweiten Ausführungsbeispiel von Fig. 9 bis 12 ist das Schließsystem analog ausgebildet, weshalb insoweit die bisherige Beschreibung gilt. Der Unterschied gegenüber dem vorausgehenden Ausführungsbeispiel besteht darin, dass angenommen wird, das vorausgehend beschriebene "keyles-go-system" sei ausgefallen, was z.B. durch äußere elektromagnetische Felder verursacht sein kann. Dann kann aber das Fahrzeug mittels des aus Fig. 9 bis 11 gezeigten Notschlüssels 50 in analoger Weise betätigt werden. Das geschieht in folgender Weise.

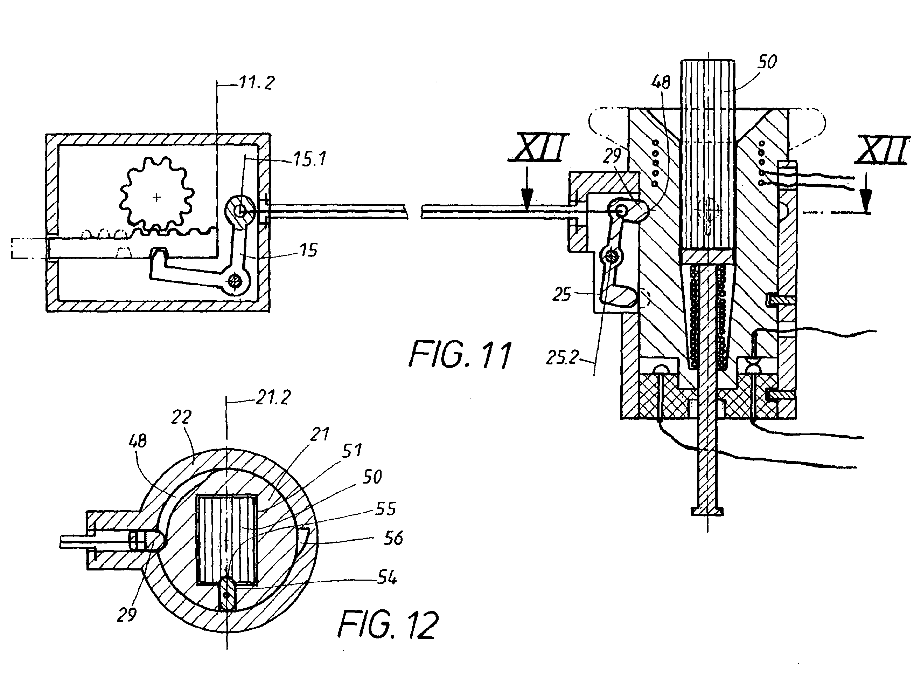

Der im ersten Ausführungsbeispiel gezeigte Rotor 21 besitzt nämlich eine Aufnahme 51 für einen solchen Schlüssel 50. Normalerweise ist die Aufnahme 51, wie aus Fig. 1 zu erkennen ist, von einem federbelasteten Deckel 52 verschlossen, der beim Einstecken des Schlüssels 50 federnd zurückgedrückt wird. Das Einstecken kann durch einen Endanschlag 53 des Deckels 52 im Rotor 21 begrenzt sein. Dann kann ein federndes Rastmittel 54 in eine Rastausnehmung 55 des Schlüssels 50 einschnappen, die zu einer Schlüssel-Abzugssicherung gehört. Diese Einschnappbewegung ist möglich, weil, gemäß Fig. 9, im Stator 22 sich eine Ausweichöffnung 56 im Bereich des Rastmittels 54 befindet. Der elektronische Schlüssel 50 kommuniziert dabei mit einer im Rotor 21 befindlichen Transponderspule, welche zu den Decodiermitteln der Zugangsberechtigung gehört. Ist die Decodierung erfolgreich, so wird der Riegel 11 in die in Fig. 9 strichpunktiert angedeutete Freigabestellung 11.2 überführt. Dann ist das Riegelblockglied 15 nicht mehr an der Verriegelungsschulter 13 abgestützt, wie bereits im Zusammenhang mit dem ersten Ausführungsbeispiel beschrieben wurde. Ferner ist über die besondere Verbindung 30 auch das Betätigerblockglied 25 unwirksam gesetzt und lässt eine Drehung des Rotors 21, z. B. über den elektronischen Schlüssel 50 zu. Es kommt daher wieder zu der vorbeschriebenen Verschwenkung des Betätigerblockglieds 25 in seine beschriebene unwirksame Position 25.2 von Fig. 11 und 12. Die gekuppelte Baugruppe aus Schlüssel 50 und Betätiger 21 befindet sich dann in der bereits oben beschriebenen Arbeits-Drehlage 21.2. Diese Arbeitslage ist in Fig. 12 gezeigt. Dann ist nicht nur, wie schon beim ersten Ausführungsbeispiel im Zusammenhang mit Fig. 5 beschrieben wurde, das Riegelblockglied 15 in seiner wirksamen Schwenkposition 15.1 von Fig. 11, sondern auch das Herausziehen des Schlüssels 50 ist gemäß Fig. 12 blockiert. Das Rastmittel 54 der Schlüsselabzugssicherung ist nämlich in seiner Rastausnehmung 55 gesichert, weil es sich radial an der Innenfläche des Rotors 22 abstützt und nicht mehr mit der Ausweichöffnung 56 im Stator 22 radial ausgerichtet ist. Erst wenn die gekuppelte Baugruppe aus Schlüssel 50 und Rotor 21 wieder in ihre aus Fig. 9 und 10 ersichtliche Ruhelage 21.1 zurückgedreht worden ist, ist ein Herausziehen des Schlüssels 50 möglich.

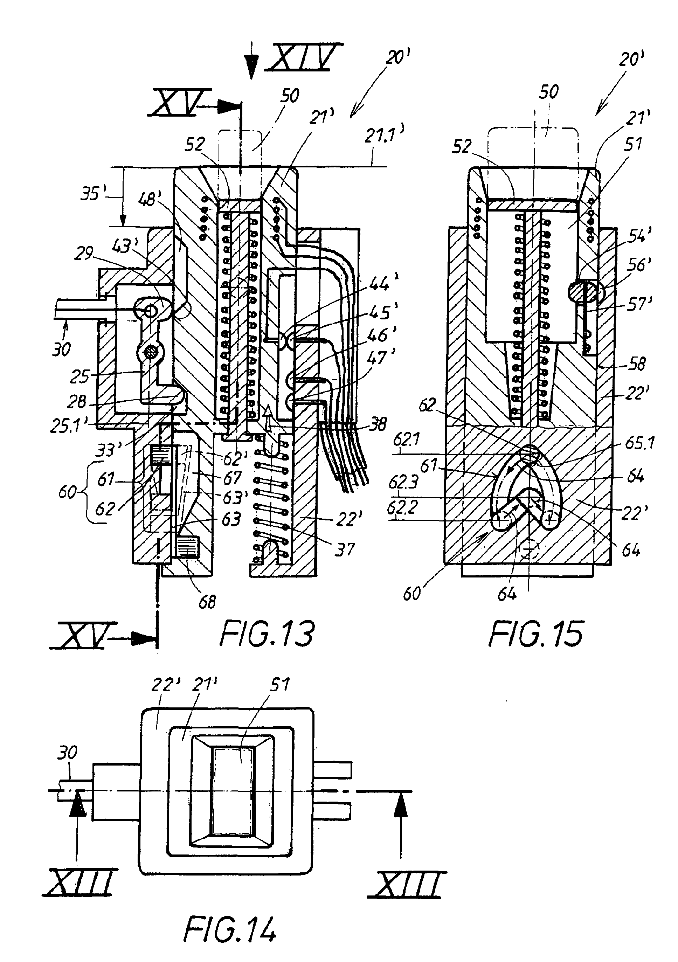

Ein drittes Ausführungsbeispiel der Erfindung ist in den Fig. 13 bis 17 gezeigt und wird, wie bereits bei der Figurbeschreibung erwähnt wurde, nur anhand der hier abweichend ausgebildeten Motorsteuerung 20' erläutert. Die Diebstahlssicherung 10 kann so wie in den beiden ersten Ausführungsbeispielen von Fig. 1 bzw. 9 ausgebildet sein. Zur Bezeichnung gleicher Teile werden die gleichen Bezugszeichen wie im ersten Ausführungsbeispiel verwendet. Soweit analoge Bauteile aber abweichend ausgebildet sind, sollen sie durch einen Strich (') gekennzeichnet sein. Es genügt lediglich auf die Unterschiede und die Ergänzungen der beiden vorausgehenden Ausführungsbeispiele einzugehen. In übriger Hinsicht gilt die bisherige Beschreibung.

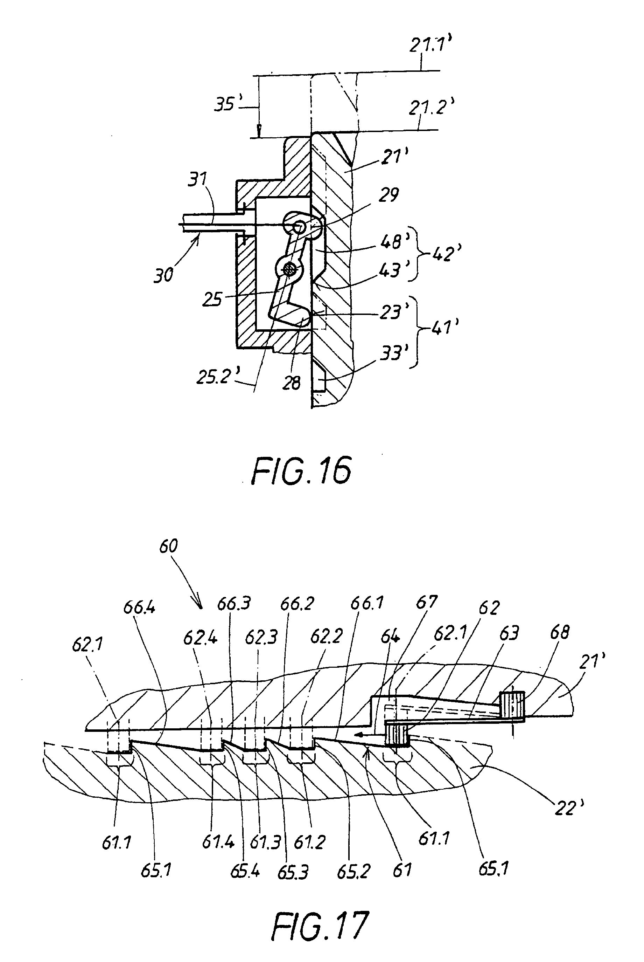

Der wesentliche Unterschied besteht darin, dass hier der Betätiger 21' als Schieber ausgebildet ist, der nach Art eines Druckknopfs wirkt, während der vorbeschriebene Rotor 21 wie ein Drehknopf arbeitete. Auch in diesem Fall kann die Betätigung, in Analogie zu Fig. 1 bis 8, durch ein "keyless-go-system" ohne Schlüssel, oder, in Analogie zu Fig. 9 bis 12, mit einem strichpunktiert angedeuteten Schlüssel (50) erfolgen. Deswegen besitzt der Schieber 21' auch eine axiale Aufnahme 51, die normalerweise wieder durch einen federbelasteten Deckel 52 verschlossen ist. Auch der Schieber 21' besitzt zwei Steuerflächen 41', 42', welche, gemäß Fig. 16, zwar als Längskontur ausgebildet sind, aber in analoger Weise mit den beiden Armenden 28, 29 des auch hier hebelartig ausgebildeten Betätigerblockglieds 25 zusammenwirken. Dieses Betätigerblockglied 25 ist jetzt in dem Gehäuse einer Führung 22' integriert, welche den Schieber 21' längsverschieblich im Sinne des Pfeils 35' von Fig. 13 bzw. 16 aufnimmt. Eine entsprechende Längsorientierung gilt natürlich auch hinsichtlich der in Fig. 13 erkennbaren analogen Kontakte 44', 45', 46' und 47' des integrierten Zünd-Anlass-Schalters.

Die Fig. 13 zeigt die Ruhelage 21.1' des Schiebers 21'. Dann greift das eine Armende 28 des Betätigerblockglieds 25 in eine Aussparung 33' in einer definierten Höhe des Schiebers 21' ein, während sich sein zweites Armende 29 an einer Längskante 43' vom Schieber 21' abstützt und dadurch auch hier die bereits im ersten Ausführungsbeispiel beschriebene wirksame Schwenkposition 25.1' bewirkt. Dann befindet sich die Diebstahlssicherung 10, wie in der analogen Fig. 1 gezeigt ist, mit ihrem Riegelblockglied 15 in einer Abstützposition ihres Riegelblockglieds 15 bei 13, 18, wodurch auch im vorliegenden Fall über die formfeste, z.B. aus Bowdenzug ausgebildete Verbindung 30 die wirksame Position 25.1' des Schiebers 21' arretiert ist.

Erst wenn durch die bereits oben beschriebenen Maßnahmen der Elektromotor den Riegel 11 in seine aus Fig. 5 des ersten Ausführungsbeispiels ersichtliche Freigabestellung 11.2 überführt hat, ist auch bei diesem dritten Ausführungsbeispiel die erwähnte Längsbetätigung 35' des Schiebers 21' möglich. Diese eingedrückte Position ist in Fig. 16 dargestellt. Der Schieber befindet sich dann in der mit 21.2' gekennzeichneten eingedrückten Arbeitslage. Durch geeignete, aufeinander abgestimmte Profilierung der in den beiden Steuerflächen 41', 42' von Fig. 16 erkennbaren Auflauf- und Ablaufschrägen fährt das erste Armende 28 vom Betätigerblockglied 25 auf die Längskante 23' vom Schieber 21', während der zweite Arm 29 in eine Ausnehmung 48' an definierter axialer Stelle vom Schieber 21 zurückweichen kann. Dadurch gelangt das Betätigerblockglied 25 in seine unwirksame Schwenkposition 25.2' von Fig. 16, wodurch über den Strang 31 der Verbindung 30 das zugehörige Riegelblockglied 15, in Analogie zu Fig. 5, in seine aus Fig. 5 ersichtliche wirksame Position 15.1 übergeht. Die Arbeitslage 21.2' des Schiebers 21' von Fig. 16 ist durch ein besonderes Richtgesperre 60 gesichert, dessen Ausbildung anhand der Fig. 13, 15 und einer ebenen Kurven-Abwickelung von Fig. 17 zu erkennen ist.

Zum Richtgesperre 60 gehört zunächst eine Herzkurve 61, welche an der Innenfläche der Führung 22' angeordnet ist. Die Herzkurve 61 wirkt mit einem federnden Steuerstift 62 zusammen, der über eine Blattfeder 63 bei 68 axialfest mit dem Schieber 21' verbunden ist. Die Herzkurve 61 besitzt ein Sägezahn-Profil, weshalb der durch den Pfeil 64 verdeutlichte Richtungssinn der Bewegung des Steuerstifts 62 entlang der in sich ringförmig geschlossenen Herzkurve 61 von Fig. 15 sich ergibt. Ausgezogen gezeichnet sind in den Fig. 13, 15 und 17 eine durch die Hilfslinie 62.1 gekennzeichnete Ausgangsposition des Schiebers 21'. Der Steuerstift 62 befindet sich dann an der in Fig. 17 mit 61.1 markierten ersten Station im Bereich der Herzkurven-Spitze. Wenn man jetzt den Schieber 21' im Sinne des Pfeils 35' druckbetätigt, dann hindert eine erste Schulter 65.1 gemäß Fig. 15 und 17 den Steuerstift 62 daran, in die "falsche Richtung" sich zu bewegen; er kann nur in Richtung der ansteigenden Rampe 66.1 der Kurve 61 von Fig. 17 sich bewegen, also in dem vorerwähnten Richtungssinn 64. Dazu besitzt der Schieber 21' eine Ausweichhöhle 67, in welche, wie gestrichelt in Fig. 13 und 17 verdeutlicht ist, der Steuerstift sich in seine Ausweichlage 62' zusammen mit dem Federblatt 63' zurückbewegen kann.

Die vorerwähnte Position 61.1 entsprach, bezogen auf die Kontakte 44' bis 47' dem Zustand "Halt" des Fahrzeugs. Bei der Druckbetätigung 35' gelangt der Schieber zunächst in seine mit 62.2 in Fig. 15 gekennzeichnete tiefste Position hinter einer aus Fig. 17 erkennbaren zweiten Schulter 65.2, was seiner zweiten Station an der in Fig. 15 linken Herzflanke entspricht. Bezogen auf die Kontakte 44' bis 47' kann diese Position 62.2 dem Zustand "Start" des Fahrzeugs bzw. dessen Motors entsprechen.

Der Schieber 21' steht unter der beständigen Wirkung einer aus Fig. 13 erkennbaren Rückstellfeder 37, welche eine durch einen Kraftpfeil in Fig. 13 verdeutlichte Rückstellkraft 38 auf den Schieber 21' ausübt. Dadurch ist der Schieber 21' bestrebt in seine Ruhelage 21.1' zu gelangen. Dies geschieht auch nach der vorerwähnten Druckbetätigung, wo der Steuerstift 62 die beschriebene zweite Position 62.2 erreicht hat. Wird dann kein manueller Druck auf den Schieber 21' ausgeübt, so geht der Steuerstift aus der Position 62.2 von selbst in seine in Fig. 15 und 17 mit 62.3 gekennzeichnete mittlere Axialposition über und befindet sich dann in dem mit 61.3 in Fig. 17 gekennzeichneten Kurvenstück, nämlich einer dritten Station, die sich im Bereich des mittigen Herzeinschnitts der Kurve 61 befindet. Es ist eine zwischenstabile Position vom Schieber 21' erreicht, welche dem Zustand "Fahrt" des Fahrzeugs bzw. seines Motors entspricht. Der Schieber 21' befindet sich dann in seiner Arbeitslage 21.2'.

Weil auch die dritte Station 61.3 in Rückrichtung durch die aus Fig. 17 erkennbare dritte Schulter 65.3 gesperrt ist, ist bei einer weiteren Druckbetätigung wieder nur eine Bewegung in Richtung der aus Fig. 17 erkennbaren dritten Rampe 66.3 im Sinne des Pfeils 64 von Fig. 15 möglich. Es kommt erneut zu einer tiefsten Position 62.4 der Steuerkurve 61 hinter einer vierten Schulter 65.4. Dann ist eine vierte Station im Bereich der rechten Herzflanke von Fig. 15 erreicht, die in Fig. 17 mit 61.4 gekennzeichnet ist. Diese vierte Station ist aber nicht stabil, weil sich an der vierten Station 61.4 sogleich die im Entspannungssinne der Feder 37 weisende vierte Rampe 66.4 gemäß Fig. 17 anschließt. Wenn die manuelle Druckausübung auf den Schieber 21' nachlässt, wird der Schieber 21 automatisch durch die erwähnte Rückstellkraft 38 weiterbewegt. Der Schieber 21' gelangt also dann automatisch, ohne Zwischenhalt, in seine oberste Position 62.1 an der Station 61.1 im Bereich der Herzspitze. Der Schieber 21' befindet sich dann wieder in seiner Ruhelage 21.1'.

Bei einer Steuerung über den bereits erwähnten Schlüssel 50 lässt sich auch in diesem dritten Ausführungsbeispiel der Schlüssel nur in der Ruhelage 21.1' des Schiebers 21' einstecken oder abziehen. Das wird wieder über ein federndes Rastmittel 54' einer Abzugssicherung erreicht, welches über eine Blattfeder 57' axialfest mit dem Schieber 21' verbunden ist und durch eine Öffnung ins Innere der Schlüsselaufnahme 51 hineinragt. Im Falle einer Schlüsselbenutzung rastet dieses Rastmittel 54' in analoger Weise in eine Rastausnehmung des Schlüssels 50 ein, wie es in Fig. 9 gezeigt ist. Dieses Rastmittel 54' ist, wie Fig. 15 verdeutlicht, ebenfalls nur dann mit einer Ausweichöffnung 56' ausgerichtet, wenn die dortige Ruhelage 21.1' vorliegt. Nach der Druckbetätigung 35' von Fig. 16 hat sich das Rastmittel 54' mit dem Schieber 21' axial von der Ausweichöffnung 56' entfernt und stützt sich an der in Fig. 15 mit 58 gekennzeichneten Innenfläche 58 der Schieberführung 22' ab.

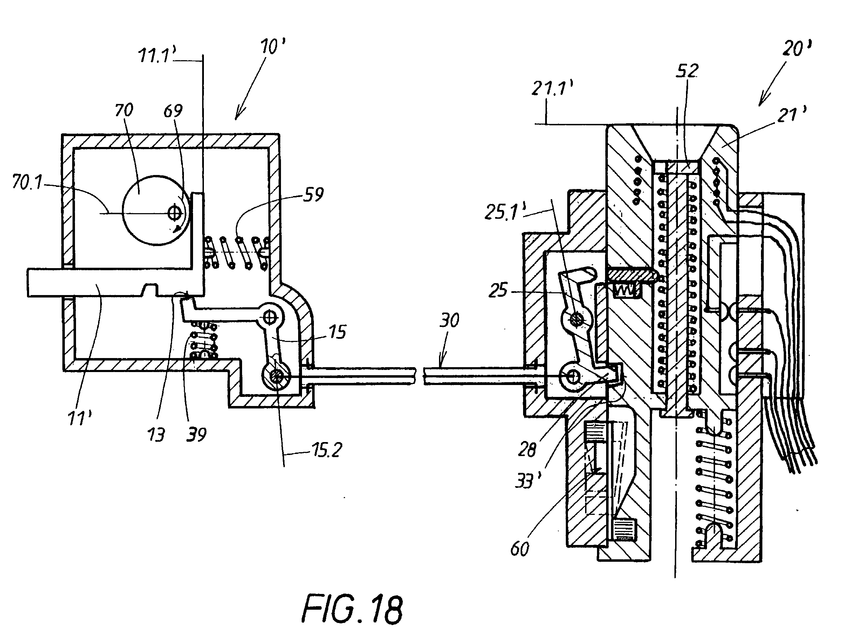

In den Fig. 18 bis 20 ist ein viertes Ausführungsbeispiel der Erfindung dargestellt, die nur mit einem einzusteckenden elektronischen Schlüssel 50 zusammenwirkt. In diesem Fall ist die Motorsteuerung 20' weitgehend derjenigen des vorbeschriebenen dritten Ausführungsbeispiels von Fig. 13 bis 17 ähnlich, weshalb insoweit die bisherige Beschreibung gilt. Es liegt also auch in diesem Fall ein druckbetätigbarer Schieber 21' vor, der allerdings nur mit dem richtigen Schlüssel 50 betätigt werden kann. Die nachfolgend erläuterten Abwandlungen können sinngemäß aber auch bei einem drehbetätigbaren Rotor 21 gemäß den beiden ersten Ausführungsbeispielen von Fig. 1 bis 12 angewendet werden.

Unterschiedlich gegenüber den vorausgehenden Ausführungsbeispielen ist aber die Diebstahlssicherung 10' ausgebildet, weshalb hier zur Benennung analoger Bauteile zwar die gleichen Bezugszeichen wie bei der vorbeschriebenen Diebstahlssicherung 10 benutzt werden, allerdings zu deren Unterscheidung mit einem Strich (') versehen sind. Die beidseitigen Blockadeglieder 15, 25 und ihre gemeinsame Verbindung 30 sind im wesentlichen in Übereinstimmung mit den vorausgehenden Ausführungsbeispielen ausgebildet, weshalb insoweit auf die vorausgehende Beschreibung verwiesen werden kann. Es genügt lediglich auf die Unterschiede einzugehen.

Die Fig. 18 zeigt einen zu Fig. 1 analogen Sachverhalt. Der Schieber 21' befindet sich zwar in seiner axialen Ruhelage 21.1', doch ist der Schlüssel noch nicht eingesteckt. Auch in diesem Fall ist das Riegelblockglied 15 in der Verriegelungsstellung 11.1' des Riegels 11' an einer Verriegelungsschulter 13 abgestützt und über die Verbindung 30 Ursache dafür, dass das Betätigerblockglied 25 sich in seiner wirksamen Position 25.1' befindet, wo sein erster Arm 28 in die Aussparung 33' eingreift und dadurch die Ruhelage 21.1' des Schiebers 21' arretiert. Das gilt, obwohl das Riegelblockglied 15, welches sich in Fig. 18 in seiner unwirksamen Position 15.2 befindet, in Richtung seiner wirksamen Position durch eine Rückstellfeder 39 kraftbelastet ist. Um in seine wirksame Position 15.1 zu gelangen, müsste sich das Riegelblockglied 15, in Fig. 18 gesehen, im Uhrzeigersinn verschwenken können, was aber wegen der Abstützung an der Verriegelungsschulter 13 gerade nicht möglich ist.

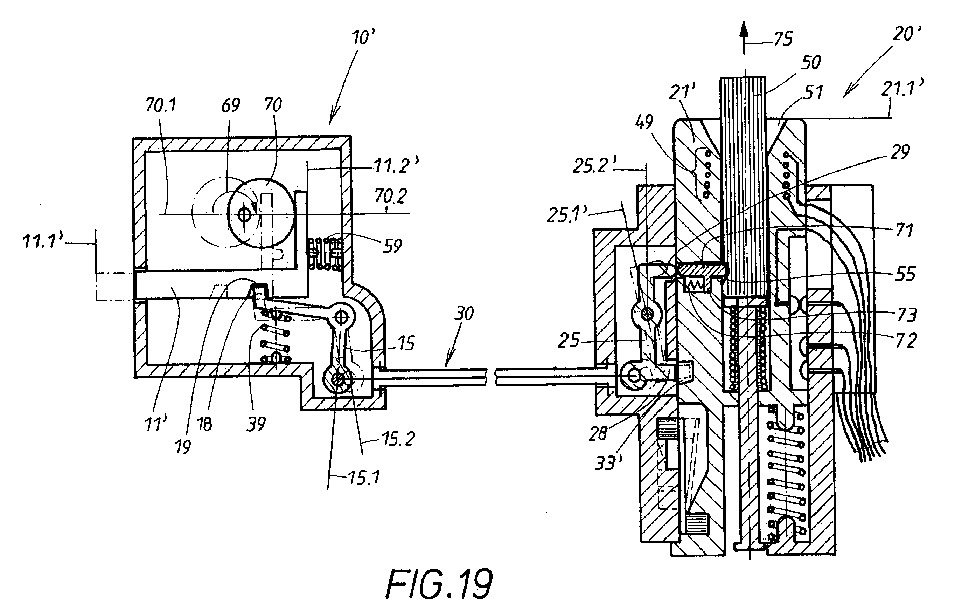

Wenn der Schlüssel 50 gemäß Fig. 19 in die Aufnahme 51 des Schiebers 51' eingesteckt wird, wird durch Wechselwirkung mit dem Transponder 49 die Zugangsberechtigungs-Einrichtung den richtigen Schlüssel 50 als zugehörig identifizieren und einen Elektromotor veranlassen, einen Exzenter 70 so umzusteuern, dass der Riegel 11' gegen die Wirkung einer Riegel-Rückstellfeder 59 den Riegel 11' in seine aus Fig. 19 ersichtliche Freigabestellung 11.2' überführt. Dann ist aber das Sperrende 18 des Riegelblockglieds 15 in Ausrichtung mit einer Sperrausnehmung 19 vom Riegel 11', in welche er durch seine Rückstellfeder 39 hineingedrückt wird. Das Riegelblockglied 15 gelangt dann in seine wirksame Position 15.1 und nimmt über die Verbindung 30 das Betätigerblockglied 25 mit. Dadurch gelangt dieses aus der bis dahin vorliegenden wirksamen Position 25.1', die in Fig. 19 strichpunktiert angedeutet ist, in seine unwirksame, ausgezogen gezeichnete Position 25.2'. Dann ist, wie Fig. 19 zeigt, das Armende 28 außerhalb der Aussparung 33' und lässt daher eine Druckbetätigung des Schiebers 21' zu. Gleichzeitig findet eine Verrastung zwischen dem Schlüssel 50 und dem Schieber 21' statt. Dafür sorgt ein Stößel 71, welcher durch eine Stößelfeder 72 bestrebt ist, in eine Rastausnehmung 55 des Schlüssels 50 einzufahren. Der Stößel 71 hat einen Ansatz 73, in welchem nicht nur die Stößelfeder 72 angreift, sondern der zugleich als Endanschlag zur Begrenzung der Längsbewegung des Stößels 71 dient. In Fig. 19 ist eine Druckbetätigung des Schiebers 21' möglich.

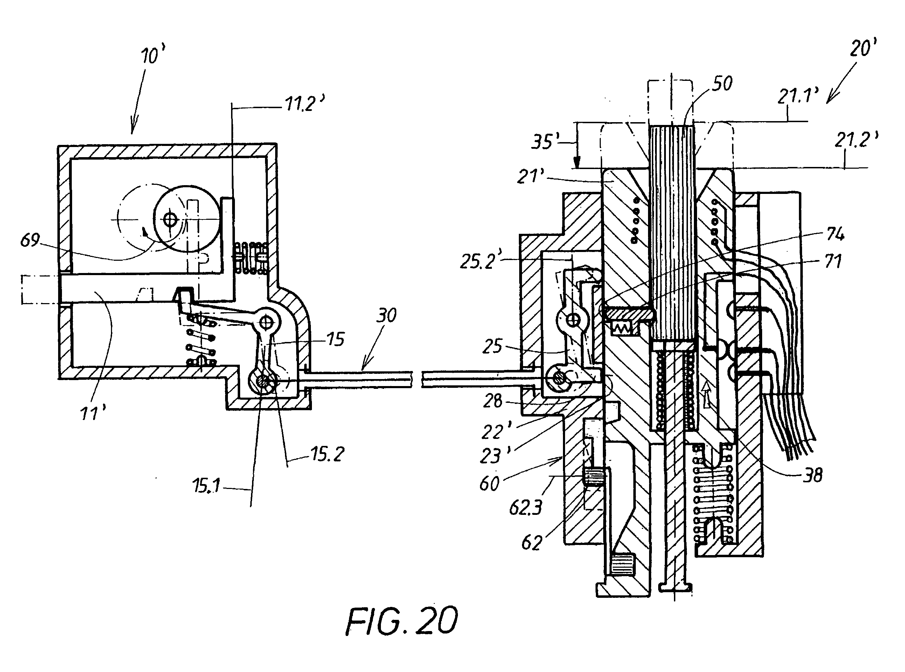

Diese Druckbetätigung 35' ist in Fig. 20 ausgeführt worden und der Schieber 21' aus seiner dort noch strichpunktiert angedeuteten Ruhelage 21.1' in seine Arbeitslage 21.2' überführt. Diese Schieber-Lagen werden wieder durch das vorbeschriebene besondere Richtgesperre 60 gehalten, dass in der im Zusammenhang mit dem dritten Ausführungsbeispiel beschriebenen Weise ausgebildet ist. In Fig. 20 befindet sich der beschriebene Steuerstift 62 wieder in seiner mittleren Position 62.3 im Bereich des Herzeinschnitts der dortigen Herzkurve 61. Der Schieber 21' steht zwar unter der Wirkung seiner Rückstellkraft 38, die aber sich jetzt nicht entfalten kann. Der Schlüssel 50 ist in seiner Einstecklage im Schieber 21' fixiert, weil ihn der Stößel 71 festhält und der Stößel 71 unverschieblich geworden ist. Letzteres ergibt sich, weil sein Außenende sich an einer Innenfläche 74 der dortigen Schieber-Führung 22' abstützt.

Bedeutsam ist wieder die besondere Arretierung des Riegelblockglieds 15. Der Riegel 11' wird in seiner Freigabestellung 11.2' durch das an der Motorsteuerung 20' vorgesehene Betätigerblockglied 25 gesichert. Letzteres 25 befindet sich bei Fig. 20 immer noch in der bereits in Fig. 19 beschriebenen unwirksamen Position 25.2'. Diese unwirksame Position 25.2' ist aber in Fig. 20 gesichert, weil sich sein erstes Armende 28 an seiner Längskontur 23' abstützt. Dadurch ist eine im Gegenuhrzeigersinn von Fig. 20 erforderliche Umschwenkbewegung des Betätigerblockglieds 25 in seine dort strichpunktiert angedeutete wirksame Position nicht möglich. Über die Verbindung 30 ist daher auch im Bereich der Diebstahlssicherung 10' eine solche im Gegenuhrzeigersinn wirksame Schwenkbewegung des Riegelblockglieds 15 aus dessen dortigen ausgezogen gezeichneten wirksamen Position 15.1 in die strichpunktiert veranschaulichte unwirksame Position 15.2 nicht möglich.

Durch erneute Druckbetätigung der aus Schlüssel 50 und Schieber 21' bestehenden Baugruppe wird über die vorbeschriebene Herzkurve 61 des Richtgesperres 60 wieder die Ruhelage 21.1' von Fig. 19 erreicht. Über die nicht näher gezeigte Steuerelektronik kann dann der Elektromotor den Exzenter 70 aus seiner zunächst noch bestehenden, ausgezogen gezeichneten, durch eine Hilfslinie 70.2 markierten Einschub-Drehlage in die in Fig. 19 bereits strichpunktiert verdeutlichte gegensinnige Ausschub-Drehlage zurückbewegen, welche, in Übereinstimmung mit Fig. 19, mit der Hilfslinie 70.1 markiert ist. Dabei kann der Elektromotor den Exzenter 70 im gleichen Drehsinn 69 wie im vorausgehenden Fall zwischen Fig. 18 und 19 weiterdrehen. Dann ist zwar die Riegel-Rückstellfeder 59 bestrebt den Riegel 11' aus der Freigabestellung 11.2' wieder zurückzubewegen, doch ist das nicht möglich, weil zunächst das Riegelblockglied 15 mit seinem Sperrende 18 immer noch in die Sperrausnehmung 19 des Riegels 11' eingreift.

Die Freigabestellung 11.2' bleibt solange erhalten, bis der Schlüssel 50 aus dem Schieber 21' abgezogen worden ist. Gemäß Fig. 19 stützt sich nämlich der Stößel 71 an dem zweiten Armende 29 des Betätigerblockglieds 25 ab, ist aber nicht mehr, wie in Fig. 20, gesperrt. Der Schlüssel kann daher im Sinne des Bewegungspfeils 25 von Fig. 19 aus dem Schieber 21' herausgezogen werden. Dabei fährt das innere Ende des Stößels 71 aus der schlüsselseitigen Rastausnehmung 55 heraus und bewirkt eine Längsbewegung des Stößels 71 gegen dessen Stößelfeder 72. Diese ist ja in Fig. 19 möglich, weil das erste Armende 28 des Betätigerblockglieds 25 wieder mit der Aussparung 33' an der Längskante des Schiebers 21' ausgerichtet ist. Durch diese Längsbewegung des Stößels 71 wird nicht nur das Betätigungsglied 25 in seine in Fig. 19 strichpunktiert angedeutete wirksame Position 25.1' zurückgeschwenkt, sondern, über die Verbindung 30, gelangt auch das Riegelblockglied 15 in seine unwirksame Position 15.2. Dann fährt das Sperrende 18 aus der Sperrausnehmung 19 vom Riegel 11' heraus und der Riegel 11' kann durch die Riegel-Rückstellfeder 59 wieder in seine strichpunktiert in Fig. 19 gezeigte Verriegelungslage 11.1' gegenüber einer nicht näher gezeigten Lenksäule gelangen. Dann liegen wieder die Verhältnisse von Fig. 18 vor.

### Bezugszeichenliste:

- 10: Diebstahlssicherung, elektrische Lenkradverriegelung (Fig. 1 bis 17)
- 10': alternative Diebstahlssicherung (Fig. 18 bis 20)
- 11: Riegel für 10 (Fig. 1 bis 17)
- 11': Riegel für 10' (Fig. 18 bis 20)
- 11.1: Verriegelungsstellung von 11
- 11.1': Verriegelungsstellung von 11'
- 11.2: Freigabestellung von 11
- 11.2': Freigabestellung von 11'
- 12: Gehäuse für 11
- 13: erste Schulter, Verriegelungsschulter für 15
- 14 4: Schwenklager für 15 in 12
- 15: zweites Blockadeglied, Riegelblockglied
- 15.1: wirksame Position von 15
- 15.2: unwirksame Position von 15
- 16: Zahnrad für Elektromotor
- 17: Zahnstange
- 18: Sperrende von 15
- 19: Sperrausnehmung in 11 bzw. 11' für 18
- 20: Motorsteuerung, Zünd-Anlass-Schalter (Fig. 1 bis 12)
- 20': alternative Motorsteuerung (Fig. 13 bis 20)
- 21: Betätiger für 20, Rotor
- 21': Betätiger für 20', Schieber
- 21.1: Ruhelage von 21
- 21.1': axiale Ruhelage von 21'
- 21.2: Arbeitslage von 21
- 21.2': axiale Arbeitslage von 21'
- 22: Stator zu 21
- 22': Längsführung für 21'
- 23: Umfangsbereich von 21, Arbeitsschulter von 41 (Fig. 3)
- 23': Längskante von 21' (Fig. 16)
- 24: Nut in 21
- 25: erstes Blockadeglied, Betätigerblockglied
- 25.1: wirksame Position von 25 für 21
- 25.1': wirksame Position für 21'
- 25.2: unwirksame Position für 21
- 25.2': unwirksame Position für 21' (Fig. 16)
- 26: Sicherungsstift an 22 für 21 (Fig. 3)
- 27: Drehhandhabe an 21
- 28: erstes Armende von 25
- 29: zweites Armende von 25
- 30: Verbindung, Bowdenzug
- 31: Druck-Zug-Strang von 30
- 32: Mantel
- 33: Radialaussparung in 21 von 41 (Fig. 3)
- 33': Aussparung in 21' von 41' (Fig. 13, 16)
- 34: Schwenklager von 25 in 22
- 35: Pfeil der Drehbetätigung von 21 (Fig. 8)
- 35': Pfeil der Längsverschiebung von 21' (Fig. 13, 16)
- 36: Pfeil der Gegendrehung von 21 (Fig. 8)
- 37: Rückstellfeder für 21' (Fig. 13)
- 38: Rückstellkraft von 37 auf 21' (Fig. 13)
- 39: Blockade-Rückstellfeder von 15 (Fig. 18)
- 40: Schalter bei 20
- 41: erste Steuerfläche für 28 von 21 (Fig. 2)
- 41': erste Steuerfläche für 28 von 21' (Fig. 16)
- 42: zweite Steuerfläche für 29 von 21 (Fig. 3)
- 42': zweite Steuerfläche für 29 von 21' (Fig. 16)
- 43: Umfangsbereich von 41 für 29
- 43': Längskantenbereich von 41' für 29 (Fig. 16)
- 44: beweglicher Kontakt von 20
- 44': beweglicher Kontakt von 20'
- 45: ruhender Kontakt von 20
- 45': ruhender Kontakt von 20' (Fig. 13)
- 46: ruhender Kontakt von 20
- 46': ruhender Kontakt von 20' (Fig. 13)
- 47: ruhender Kontakt von 20
- 47': ruhender Kontakt von 20' (Fig. 13)
- 48: Ausnehmung in 21 für 29 von 42 (Fig. 2)
- 48': Ausnehmung in 21' für 29 von 42' (Fig. 16)
- 49: Transponderspule
- 50: Notschlüssel, elektronischer Schlüssel
- 51: Aufnahme in 21 bzw. 21' für 50
- 52: verschließbarer Deckel für 51
- 53: Endanschlag für 52
- 54: Abzugssicherung für 50, Rastmittel für 21
- 54': Abzugssicherung für 50, Rastmittel für 21'
- 55: Abzugssicherung für 50, Rastausnehmung
- 56: Ausweichöffnung für 54
- 56': Ausweichöffnung für 54'
- 57: Abzugssicherung für 50, Blattfeder von 54
- 57': Abzugssicherung für 50, Blattfeder von 54'
- 58: Innenflächenbereich von 22' für 54' (Fig. 15)
- 59: Riegel-Rückstellfeder (Fig. 19)
- 60: Richtgesperre für 61, 62 (Fig. 15, 17)
- 61: Herzkurve in 22' von 60 (Fig. 15)
- 61.1: erste Station von 61, Herzspitze
- 61.2: zweite Station von 61, linke Herzflanke
- 61.3: dritte Station von 61, mittiger Herzeinschnitt
- 61.4: instabile vierte Position, rechte Herzflanke von 61
- 62: Steuerstift von 60 (Wirklage)
- 62': Ausweichlage von 62 (Fig. 13)
- 62.1: oberste Position von 62
- 62.2: tiefste Position von 62
- 62.3: mittlere Position von 62
- 62.4: instabile vierte Position von 62
- 63: Federblatt (Wirklage)
- 63': Ausweichlage von 63 (Fig. 13)
- 64: Pfeil des Richtungssinns von 62 gegenüber 61 (Fig. 15, 17)
- 65.1: erste Schulter von 61 (Fig. 15, 17)
- 65.2: zweite Schulter von 61
- 65.3: dritte Schulter von 61
- 65.4: vierte Schulter von 61
- 66.1: erste Rampe von 61
- 66.2: zweite Rampe von 61
- 66.3: dritte Rampe von 61
- 66.4: vierte Rampe von 61
- 67: Ausweichhöhle in 21' für 62', 63' (Fig. 13)
- 68: Fixierstelle von 62 an 21' (Fig. 13)
- 69: Pfeil der Exzenterdrehung (Fig. 18 bis 20)
- 70: Exzenter des Elektromotors (Fig. 18, 19)
- 70.1: Ausschub-Drehlage von 70
- 70.2: Einschub-Drehlage von 70
- 71: Stößel (Fig. 19)
- 72: Stößelfeder für 71 (Fig. 19)
- 73: Ansatz an 71 (Fig. 19)
- 74: Innenfläche von 22 (Fig. 20)
- 75: Pfeil der Herausziehbewegung von 50 (Fig. 19)

## Patentansprüche

1. Schließsystem für Motorfahrzeuge, mit einer Einrichtung zur Fahrtberechtigung
mit einem zum Steuern des Motors dienenden Betätiger (21),
welcher zwischen einer den Parkzustand des Fahrzeugs kennzeichnenden Ruhelage (21.1) und mindestens einer, z.B. den Fahrtzustand kennzeichnenden Arbeitslage (21.2) manuell bewegbar ist,
wobei ein erstes Blockadeglied (Betätigerblockglied 25) normalerweise den Betätiger (21) in dessen Ruhelage (21.1) sichert,
und mit einem Riegel (11) für eine Diebstahlssicherung (10) des Fahrzeugs, die z.B. an einer Lenksäule angreift,
welcher zwischen einer Freigabestellung (11.2) und einer Verriegelungsstellung (11.1) umsteuerbar ist,
wobei ein zweites Blockadeglied (Riegelblockglied 15) den Riegel in der Freigabestellung (11.2) sichert,
**dadurch gekennzeichnet,**
**dass** zwischen dem Betätigerblockglied (25) und dem Riegelblockglied (15) eine Verbindung (30) besteht,
welche das Riegelblockglied (15) wirksam (15.1) setzt, wenn das Betätigerblockglied (25) unwirksam (25.2) ist, und umgekehrt, das Riegelblockglied (15) unwirksam (15.2) macht, wenn das Betätigerblockglied (25) wirksam (25.1) ist
und das Riegelblockglied (15) in der Verriegelungsstellung (11.1) des Riegels (11) sich an einer ersten Schulter (Verriegelungsschulter 13) abstützt und mittels der Verbindung (30) Ursache dafür ist,
**dass** die wirksame Position (15.1) des Betätigerblockglieds (25), welche den Betätiger (21) in der Ruhelage (21.1) hält, arretiert bleibt.

2. Schließsystem nach Anspruch 1, **dadurch gekennzeichnet, dass** die Verriegelungschulter (13) bei der Umsteuerung des Riegels (11) mitbeweglich ist und in der Freigabestellung (11.2) des Riegels (11) vom Riegelblockglied (15) entfernt ist.

3. Schließsystem nach Anspruch 1 oder 2, **dadurch gekennzeichnet, dass** das Betätigerblockglied (25) in der Arbeitslage (21.2) des Betätigers (21) sich an einer zweiten Schulter (Arbeitsschulter 23) abstützt und mittels der Verbindung (30) Ursache dafür ist,
dass die wirksame Position (15.1) des Riegelblockglieds (15), welche den Riegel (11) in dessen Freigabestellung (11.2) hält, arretiert bleibt.

4. Schließsystem nach Anspruch 3, **dadurch gekennzeichnet, dass** die Arbeitsschulter (23) aus einer Kontur des Betätigers (21) besteht, die bei der Bewegung des Betätigers (21) mitbewegt wird und in der Ruhelage (21.1) des Betätigers (21) vom Betätigerblockglied (25) entfernt ist.

5. Schließsystem nach einem der Ansprüche 1 bis 4, **dadurch gekennzeichnet, dass** der Betätiger aus einem Rotor (21) besteht, der in einem ortsfesten Stator (22) drehbar (35, 36) aufgenommen ist,
dass das Betätigerblockglied (25) im Stator (22) integriert ist
und dass der Rotor (21) eine als Umfangskontur ausgebildete Steuerfläche (41, 42) für das Betätigerblockglied (25) aufweist, in welche die Arbeitsschulter (23) integriert ist.

6. Schließsystem nach Anspruch 5, **dadurch gekennzeichnet, dass** der Rotor (21) Drehhandhaben (27) zu seiner Betätigung aufweist.

7. Schließsystem nach Anspruch 5 oder 6, **dadurch gekennzeichnet, dass** die Zugangsberechtigungs-Einrichtung aus einem im Besitz der berechtigten Person befindlichen Mobilteil (50) und aus einem im Fahrzeug angeordneten Stationärteil besteht,
dass der Mobilteil ein codiertes Steckglied (50), wie ein elektronischer Schlüssel, ist
und dass der Rotor (21) eine Aufnahme (51) für das Steckglied (50) aufweist, in deren Bereich Decodiermittel des Stationärteils der Zugangsberechtigung angeordnet sind.

8. Schließsystem nach Anspruch 7, **dadurch gekennzeichnet, dass** das im Rotor (21) befindliche Steckglied (50) zugleich die Drehhandhabe des Rotors (21) ist.

9. Schließsystem nach Anspruch 7 oder 8, **dadurch gekennzeichnet, dass** zwischen dem Rotor (21) und dem Stator (22) eine Abzugssicherung (54 bis 56) für das Steckglied (50) angeordnet ist
und dass die Abzugssicherung (54 bis 57) nur in der die Ruhelage (21.1) kennzeichnenden Drehposition des Rotors (21) ein Herausziehen des Steckglieds (50) aus dem Rotor (21) gestattet.

10. Schließsystem nach einem der Ansprüche 1 bis 4, **dadurch gekennzeichnet, dass** der Betätiger aus einem Schieber (21') besteht, welcher in einer ortsfesten Führung (22') längsverschieblich (35') aufgenommen ist,
dass das Betätigerblockglied (25) in die Führung (22') integriert ist
und dass der Schieber (21') mindestens eine als Längskontur ausgebildete Steuerfläche (41', 42') aufweist, in welche die Arbeitsschulter (23') integriert ist.

11. Schließsystem nach Anspruch 10, **dadurch gekennzeichnet, dass** der Schieber (21') als Druckbetätiger fungiert und in Richtung seiner Ruhelage (21.1') axial federbelastet (38) ist.

12. Schließsystem nach Anspruch 10 oder 11, **dadurch gekennzeichnet, dass** die Zugangsberechtigungs-Einrichtung aus einem im Besitz der berechtigten Person befindlichen Mobilteil (50) und aus einem im Fahrzeug angeordneten Stationärteil besteht,
dass der Mobilteil ein codiertes Steckglied (50), wie ein elektronischer Schlüssel, ist
und dass der Schieber (21') eine Aufnahme (51) für das Steckglied (50) aufweist, in deren Bereich Decodiermittel des Stationärteils der Zugangsberechtigung angeordnet sind.

13. Schließsystem nach Anspruch 12, **dadurch gekennzeichnet, dass** das im Schieber (21') befindliche Steckglied (50) zugleich zur Druckbetätigung des Schiebers (21') dient.

14. Schließsystem nach Anspruch 12 oder 13, **dadurch gekennzeichnet, dass** zwischen dem Schieber (21') und seiner Führung (22') eine Abzugssicherung (54' bis 57') für das Steckglied (50) angeordnet ist
und dass die Abzugssicherung (54' bis 57') nur in der die Ruhelage (21.1') kennzeichnenden Axialposition ein Herausziehen des Steckglieds (50) aus dem Schieber (21') gestattet.

15. Schließsystem nach einem der Ansprüche 7 bis 9 oder 12 bis 14, **dadurch gekennzeichnet, dass** ein Herausziehen (75) des Steckglieds (50) aus dem Schieber (21') bzw. dem Rotor Ursache dafür ist,
dass über die Verbindung (30) das Riegelblockglied (50) unwirksam (15.2) und der Riegel (11') freigegeben wird.

16. Schließsystem nach einem der Ansprüche 1 bis 15, **dadurch gekennzeichnet, dass** die Umsteuerung des Riegels (11') aus der Verriegelungsstellung (11.1') in die Freigabestellung (11.2') über ein Motorgetriebe erfolgt, an dessen Getriebausgang (70) der Riegel (11') kraftschlüssig angreift
und dass der Riegel (11') in Richtung der Verriegelungsstellung (11.1') und/oder das Riegelblockglied (15) in Richtung der Wirksamkeit (15.1) federbelastet (59; 39) sind.

17. Schließsystem nach einem der Ansprüche 1 bis 15, **dadurch gekennzeichnet, dass** die Umsteuerung des Riegels (11) aus der Verriegelungsstellung (11.1) in die Freigabestellung (11.2) über ein Motorgetriebe erfolgt, mit dessen Getriebeausgang (16) der Riegel (11) formschlüssig in Eingriff (17) steht.

18. Schließsystem nach einem der Ansprüche 1 bis 17, **dadurch gekennzeichnet, dass** die Verbindung (30) zwischen dem Betätigerblockglied (25) und dem Riegelblockglied (15) aus einem Bowdenzug (31, 32) besteht.

19. Schließsystem nach einem der Ansprüche 10 bis 18, **dadurch gekennzeichnet, dass** zwischen dem Schieber (21') und seiner Führung (22') ein Richtgesperre (60) angeordnet ist,
bestehend einerseits aus einer ringartig in sich geschlossenen Herzkurve (61) an dem einen Teil (22'), welche ein Sägezahnprofil (66.1, 65.1 bis 66.4, 65.4) aufweist
und andererseits aus einem in Profilrichtung federbelasteten (63) Steuerstift (62) am anderen Teil (21') besteht.

20. Schließsystem nach einem der Ansprüche 1 bis 19, **dadurch gekennzeichnet, dass** die ruhenden und beweglichen Kontakte (44, 45) in dem Zünd-Anlass-Schalter (20) zwischen dem Rotor (21) und dem Stator (22) integriert sind.
